# EUROPÄISCHE PATENTSCHRIFT

(11) **EP 1 647 699 B1**
(45) Veröffentlichungstag und Bekanntmachung des Hinweises auf die Patenterteilung: **06.05.2009**
(21) Anmeldenummer: 05022181.1
(22) Anmeldetag: 12.10.2005
(51) Int. Cl.: F02M 31/16, F02M 37/00, F02B 69/02, F02M 31/02

(54) **Kraftstoff-Wärmetauschmodul**
Fuel heat exchange modul
Module d'échange de chaleur de carburant

(30) Priorität: 15.10.2004 DE 102004050601
(43) Veröffentlichungstag der Anmeldung: 19.04.2006
(73) Patentinhaber: Kangler, Wolfram, Dipl.-Phys. Univ., 93149 Nittenau - Brunn (DE)
(72) Erfinder: Kangler, Wolfram, Dipl.-Phys. Univ., 93149 Nittenau - Brunn (DE)
(74) Vertreter: Glück, Martin

(56) Entgegenhaltungen:
- DE-A1- 3 442 980
- DE-A1- 3 800 585
- DE-A1- 10 232 514
- DE-A1- 19 963 229
- DE-U1- 20 015 011
- US-A1- 2002 170 545
- PATENT ABSTRACTS OF JAPAN Bd. 008, Nr. 249 (M-338), 15. November 1984 (1984-11-15) & JP 59 126059 A (MITSUBISHI JUKOGYO KK), 20. Juli 1984 (1984-07-20)

## Beschreibung

Die Erfindung betrifft ein Wärmetauschmodul für den Einsatz in einer ein Einspritzsystem aufweisenden Brennkraftmaschine, wobei zum Betrieb der Brennkraftmaschine dem Einspritzsystem zumindest eine erste Kraftstoffsorte zugeführt wird, wie z.B. in der DE 3 442 980 dargestellt.

Pflanzenöle als biogene Treibstoffe weisen gegenüber fossilen Energieträgern ökologische und ökonomische Vorteile auf: Sie stammen aus nachwachsenden Rohstoffen, sind dadurch bei der Verbrennung weitgehend kohlendioxid-neutral, frei von Schwefel und im Gegensatz zu konventionellen Kraftstoffen biologisch gut abbaubar. Ferner ist der Partikelausstoß bei der Verbrennung gegenüber Diesel drastisch reduziert.

Aufgrund der gegenüber von Dieselkraftstoffen bzw. Biodiesel chemisch und physikalisch anderen Kraftstoffeigenschaften von Pflanzenölen werden zum Betrieb von handelsüblichen Kraftfahrzeugen mit Pflanzenöl entweder speziell entwickelte Pflanzenölmotoren bzw. modifizierte Seriendieselmotoren eingesetzt. Jedoch wirft eine derartige Verwendung von naturbelassenem Pflanzenöl als Kraftstoff insbesondere in modernen direkt einspritzenden Seriendieselmotoren erhebliche technische Schwierigkeiten auf.

Herkömmliche Einspritzsysteme nahezu sämtlicher handelsüblicher SerienDieselmotoren weisen beispielsweise eine Kraftstoffleitung bzw. Vorlaufleitung von einem Kraftstofftank, insbesondere Dieseltank zu einem Einspritzsystem und eine Rücklaufleitung vom Einspritzsystem zurück in den Kraftstofftank auf. Während des Betriebs beispielsweise eines Serien-Dieselmotors beträgt der Volumenstrom im Umlauf vom Kraftstofftank durch das Einspritzsystem und zurück in den Kraftstofftank im Mittel ein Vielfaches des tatsächlich pro Zeiteinheit vom Serien-Dieselmotor verbrauchten Kraftstoffanteils. Der derartig umlaufende Kraftstoff dient hierbei im Einspritzsystem zur Schmierung der mechanischen Teile und fördert darüber hinaus die Betriebswärme aus dem Einspritzsystem. In einer Vielzahl von Einspritzsystemen wird daher der rücklaufende Kraftstoff zusätzlich zum Beheizen beispielsweise eines Kraftstoff-Vorlauffilters benutzt.

Bei neuartigen Einspritzsystemen mit Radialkolbenpumpe und vor allem solchen mit "Common Rail"- oder "Pumpe-Düse"- oder "Pumpe-Leitung-Düse"-Verfahren hingegen dient der im Einspritzsystem umlaufende Kraftstoff insbesondere zur Kühlung. Durch mechanische Arbeit und die Anordnung der Kraftstoff führenden Komponenten ergibt sich prinzipbedingt im Betrieb eines derartigen Einspritzsystems eine thermische Leistung von mehreren Kilowatt, die mit Hilfe des Kraftstoffumlaufs kompensiert wird. Vor der Rückführung zum Kraftstofftank durchläuft der erwärmte Kraftstoff häufig einen Wärmetauscher bzw. Rücklaufkühler. Über einen derartigen Rücklaufkühler wird das Einspritzsystem thermisch stabil gehalten. Über die Rücklaufleitung werden darüber hinaus im Kraftstoff entstandene Gasblasen oder unbeabsichtigt eingedrungene Luft kontinuierlich aus dem Einspritzsystem entfernt.

Bei der Verwendung von Kraftstoffen, die bei erhöhten Kraftstofftemperaturen für die Einspritzung und Verbrennung im Motor günstigere Eigenschaften aufweisen hat sich die Zuführung des Rücklaufes - ganz oder teilweise - zum Vorlauf unter Umgehung des Kraftstofftanks bewährt (= kurzgeschlossener Rücklauf). Dieses Verfahren findet Anwendung zur Beeinflussung der Fließeigenschaften bei Kraftstoffen mit stark temperaturabhängiger Viskosität und kann darüber hinaus auch im Verlauf der Siedekurve, in der Zündtemperatur oder anderer chemischer und physikalischer Eigenschaften begründet sein. Aus der DE 197 36 283 ist eine Kraftstoffversorgung bekannt, bei der zum Schutze vor Überhitzung des Kraftstoffes in Abhängigkeit von dessen Viskosität eine Rückleitung zum Tank vorgesehen ist.

Ferner sind Verfahren zum Betrieb einer Brennkraftmaschine mit zwei separat bevorrateten Kraftstoffsorten, beispielsweise mit Dieselkraftstoff und Pflanzenöl bekannt, bei denen einem herkömmlichen Dieselmotor in Abhängigkeit von dessen Kühlwassertemperatur entweder Dieselkraftstoff oder erwärmtes Pflanzenöl zugeführt wird. Derartige Systeme sind in der Literatur unter der Bezeichnung 2-Tank-Systeme bekannt. Aus der DE 202 08 590 ist beispielsweise ein 2-Tank-System bekannt, bei dem die Erwärmung mittels eines kühlwasserbetriebenen Wärmetauschers und einer elektrischen Heizquelle erfolgt. Das Pflanzenöl wird hierbei vorzugsweise auf 70°C erwärmt. Aus der DE 38 00 585 ist ebenfalls eine temperaturabhängige Umschaltung der Kraftstoffzuführung zum Betrieb einer Brennkraftmaschine mit zwei separaten Kraftstoffsorten bekannt.

Die heute weit verbreiteten direkt einspritzenden Dieselmotoren stellen an die Betriebsbedingungen für eine vollständige Verbrennung des eingespritzten Kraftstoffes wesentlich höhere Anforderungen als dies bei Vor- bzw. Wirbelkammer-Dieselmotoren der Fall ist. Bei der Konstruktion neuer Dieselmotoren und zugehöriger Einspritzsysteme spielen außerdem die geltenden und kommenden Abgasnormen eine entscheidende Rolle. Aufgrund der aktuellen Abgasnormen ist es erforderlich, die Stickoxid- und Ruß-Emissionen von neu entwickelten Dieselmotoren so niedrig wie möglich zu halten.

Hierzu sind aus dem Stand der Technik Abgas-Rückführungssysteme bekannt, die derzeit in einer Vielzahl der auf dem Markt erhältlichen Dieselfahrzeuge eingebaut werden. Bei derartigen Abgas-Rückführungssystemen wird über die Beimischung von Abgas zur Ansaugluft für den Brennvorgang eine niedrigere Sauerstoffkonzentration bereitgestellt. Hierdurch werden lokale Spitzentemperaturen beim Brennvorgang vermieden, die die thermische Bildung von NO (= Zeldovich-NO) begünstigen. Im direkten Zielkonflikt zur Stickoxidvermeidung steht die Rußbildung, da bei einer niedrigen Sauerstoffkonzentration eine ausreichende Oxidation des Rußes ausbleibt.

Eine weitere Maßnahme zur Reduzierung der Stickoxid-Emissionen ist die gezielte dynamische Verstellung der Einspritzung (z.T. auch mehrere Einspritzungen pro Takt) bzw. des Förderbeginns nach "spät", also bei einer im zeitlichen Ablauf später erreichten Position des Kolbens vor oder auch nach dem oberen Totpunkt. Auch über den Einspritzdruck kann Einfluss auf das Abgasverhalten genommen werden. Ein niedrigerer Einspritzdruck führt zur Bildung größerer Tröpfchen, was letztlich wieder zu einem höherem Rußanteil führt.

Der technische Aufbau sowie die Regelung eines Einspritzsystems sind bei modernen direkt einspritzenden Dieselmotoren für die Verwendung von Diesel-Normkraftstoff optimiert. Abgasrückführung, Spätverstellung des Förderbeginns etc. werden beispielsweise durch eine elektronische Regelung während des Fahrbetriebes abhängig von den aktuellen Betriebsparametern und auf den Dieselbetrieb zugeschnittenen Vergleichswerten vorgenommen. Wird nun statt Dieselkraftstoff beispielsweise reines Pflanzenöl verwendet, können gerade diese Maßnahmen häufig Fehlfunktionen oder sogar gravierende Motorschäden erzeugen.

Aktuelle Untersuchungen an entsprechenden Umrüstsystemen für den Betrieb von Seriendieselmotoren mit Pflanzenöl haben gezeigt, dass gerade bei direkt einspritzenden Dieselmotoren, besonders Bei "Common Rail" aber auch "Pumpe-Düse"-Dieselmotoren regelmäßig schwerwiegende Probleme auftreten. Beispielsweise ist eine vollständige Verbrennung des Pflanzenöles unter gewissen Betriebsbedingungen, insbesondere bei Neustart eines nicht betriebswarmen Dieselmotors oder bei mäßiger Belastung des Dieselmotors häufig nicht mehr gegeben. Gerade im Bereich der Kraft- oder Nutzfahrzeuge sowie bei landwirtschaftlichen Fahrzeugen treten solch ungünstige Betriebsbedingungen unvermeidlich regelmäßig und häufig auf. Folgen einer derartigen unvollständigen Verbrennung sind beispielsweise Eintrag von unverbranntem Pflanzenöl in das Motoröl mit der Bildung von Verklumpungen durch Polymerisation. In der Konsequenz führt dies zum Ausfall des Schmiersystems. Ebenso führen Veränderungen an den Einspritzdüsen ("Verkokungen") zu einem unbrauchbaren Spritzbild, was gravierende Schäden an den Kolbenböden, den Kolbenringen, und an den Ventilen nach sich ziehen kann.

Ohne innermotorische Modifikationen, also nur durch Veränderungen in der Peripherie des Motors und in der Kraftstoffzuführung sind derartige direkt einspritzende Seriendieselmotoren nicht zuverlässig, langzeitstabil und komfortabel auch unter Berücksichtigung regelmäßig vorkommender ungünstiger Betriebsbedingungen auf den Betrieb mit reinem Pflanzenöl umrüstbar.

Sowohl für den Kaltstart als auch die Warmlaufphase eines derartigen Dieselmotors sowie während bestimmter Betriebszustände hat es sich als technisch sinnvoll und wünschenswert erwiesen, dem Einspritzsystem reinen Dieselkraftstoff, reines Pflanzenöl oder eine Mischung aus Pflanzenöl und Dieselkraftstoff zuzuführen. Schon ein geringer Prozentsatz Dieselkraftstoff in einer Mischung mit Pflanzenöl senkt die Viskosität des Diesel-Pflanzenöl-Gemisches gegenüber der von reinem Pflanzenöl erheblich und führt darüber hinaus meist zu einer deutlich besseren Verbrennung in der Brennkraftmaschine. Hierzu ist die Einstellung eines definierten Mischungsverhältnisses des im Einspritzsystem befindlichen Kraftstoffgemisches abhängig vom jeweiligen Betriebszustand des Dieselmotors erforderlich.

Beim Startvorgang eines Dieselmotors ist es insbesondere erforderlich, dass der eingespritzte Kraftstoff sofort zündfähig und vollständig verbrennbar ist. Insbesondere bei einem Kaltstart nach einer längeren Standzeit des Dieselmotors und einer damit verbundenen Abkühlung, sollte der im Einspritzsystem befindliche Kraftstoff ganz oder zumindest anteilig durch Dieselkraftstoff ersetzt werden. Dieser Vorgang wird als "Spülvorgang" bezeichnet und wird ebenso bevorzugt vor einer Betriebsunterbrechung bei noch laufendem Motor durchgeführt. Hierzu wird dem Dieselmotor für eine bestimmte Zeitdauer ausschließlich Diesel zugeführt, wodurch sich der Dieselanteil am Kraftstoffmischungsverhältnis im Einspritzsystem kontinuierlich erhöht. Aufgrund des Aufbaus der Einspritzsysteme handelt es sich beim Spülen im Wesentlichen um einen Verdünnungsvorgang und nur zu einem geringen Teil um eine Verdrängung. Der Anteil des Pflanzenöles an der gesamten Kraftstoffmenge innerhalb des Einspritzsystems während des Spülvorganges kann deshalb in guter Näherung anhand einer exponentiellen Zerfallskurve beschrieben werden, die für ein gegebenes Einspritzsystem ausschließlich von der zugeführten Dieselkraftstoffmenge abhängt.

Wird der Kraftstoff bzw. das Kraftstoffgemisch wie zuvor beschriebenen im kurzgeschlossenen Rücklauf geführt, entspricht die zugeführte Dieselkraftstoffmenge exakt der in die Brennräume eingespritzten Kraftstoffmenge. Durch Kenntnis des Verbrauches des Kraftfahrzeugs lässt sich die Dieselkonzentration anhand der zurückgelegten Wegstrecke oder der Zeitspanne nach Einleiten des Spülvorganges abschätzen. Typische Wegstrecken für einen "ausreichenden" Spülvorgang sind 5 10 km vor dem Abschalten des Motors.

Zum Zwecke des schnelleren Zuführens von Dieselkraftstoff kann der Spülvorgang auch derart durchgeführt werden, dass ein Rücklauf zu einem Tank gewährt wird. Dann wird die zufließende Dieselmenge neben dem Verbrauch, zusätzlich durch die in den Kraftstofftank rücklaufende Kraftstoffmenge bestimmt. Letzteres dominiert den Vorgang bei weitem.

Eine Messung von Zeit oder Wegstrecke nach Einleiten des Spülvorganges lässt unter ansonsten nicht gleich bleibenden Randbedingungen hier keine zuverlässige Aussage über das aktuelle Mischungsverhältnis des Kraftstoffgemisches im Einspritzsystem zu.

Der Volumenstrom in den Kraftstofftank entspricht dem vom Einspritzsystem gepumpten Volumen und hängt von einer Vielzahl von Parametern ab. Die genaue Kenntnis darüber entzieht sich dem direkten Zugang. Es lassen sich bestenfalls Durchschnittswerte über längere Zeitspannen abschätzen, wenn eine Mittelung über die Einfluss nehmenden Parameter stattgefunden hat. Typische Größenordnungen für den Volumenstrom während des Fahrbetriebes durch eine Verteilereinspritzpumpe liegen beispielsweise bei ca. 60 Litern pro Stunde. Somit lässt sich ein Spülvorgang unter geeigneten Umgebungsparametern in weniger als einer Minute abschließen.

Die exakte Kenntnis des prozentualen Mischungsverhältnisses der Kraftstoffsorten ist hierzu nicht immer erforderlich. Insbesondere soll aber für den Spülvorgang ein Zeitpunkt zuverlässig festgestellt werden können, zu dem sich während des Betriebes des Dieselmotors ein vorgegebenes Mischungsverhältnis eingestellt hat, nachdem beispielsweise von der Zuführung eines Kraftstoffes auf einen anderen gewechselt wurde. Darüber hinaus ist es erforderlich, ein wählbares Mischungsverhältnis der Kraftstoffsorten während des Betriebes einstellen zu können sowie das eingestellte Mischungsverhältnis automatisch konstant halten zu können, ohne eine Vermischung der Kraftstoffe in den Kraftstofftanks herbeizuführen.

Darüber hinaus ist es erforderlich, dass die Temperatur des Kraftstoffes im Einspritzsystem etwa 70° Celsius beträgt. Hierbei wird ein Kompromiss aus dadurch erzielter niedriger Viskosität einerseits und einer Schonung der Bauteile der Brennkraftmaschine andererseits eingegangen, da bei einer zu starken Erhitzung der Bauteile der Brennkraftmaschine die Passmasse der Mechanik nicht mehr erfüllt werden können und deren Dichtungen nachgeben.

Herkömmliche Anordnungen sehen hierzu einen diskreten Wärmetauscher vor, der in einer Vielzahl von Anwendungsfällen keine ausreichend guten Ergebnisse liefert. Zwar wird der durch den diskreten Wärmetauscher geführte Kraftstoff erwärmt, jedoch nimmt die vorhandene Wärme rasch ab, insbesondere in den Fällen, in denen der erwärmte Kraftstoff mehrere Ventile oder eine Pumpe oder weitere Komponenten durchläuft. Insbesondere weist Pflanzenöl eine wesentliche geringe Wärmekapazität als die von Wasser auf, so beim Pflanzenölbetrieb einer Brennkraftmaschine dieses noch schneller abkühlt als Dieselkraftstoff.

Ein weiterer Nachteil ist, dass Pflanzenöl nicht häufigen Temperaturschwankungen ausgesetzt werden darf, da ansonsten chemische Veränderungen im Pflanzenöl auftreten. Somit ist es erforderlich, Pflanzenöl behutsam zu erwärmen und dann warm halten.

Aus der DE 34 42 980 A1 ist eine Einrichtung zum Filtrieren und Vorwärmen von Dieselkraftstoff bekannt, die ein Filter mit einer integrierten PTC-Heizung und einem integrierten von Kühlwasser durchströmbaren Wärmetauscher umfasst. Über den im Filter vorgesehenen Wärmetauscher wird der Dieselkraftstoff vor Zuführung zum Verbrennungsmotor abhängig von der aktuell vorliegenden Kraftstofftemperatur vorgewärmt.

Bekannt ist ebenfalls aus der DE 199 63 229 A1 eine Einrichtung zur Versorgung eines Fahrzeug-Verbrennungsmotors mit Kraftstoff bekannt, bei der über eine Rücklaufleitung der überschüssige Kraftstoff über einen Wärmetauscher eines Kraftstofffilters in den Tank rückgeführt wird. Die Zulaufleitungen vom Tank und die Rücklaufleitungen in den Tank führen hierbei über den Wärmetauscher des Kraftstofffilters. Das Kraftstofffilter weist hierbei ein Steuerventil auf, über welchen der rücklaufende Kraftstoff durch den Wärmetauscher oder über eine außerhalb des Wärmetauschers vorgesehene Umgehungsleitung wiederum in den Tank zurückgeführt werden kann.

Die DE 102 32 514 A1 zeigt eine Kraftstoffkühlung im Rücklauf eines Einspritzsystems, insbesondere eines common-rail Einspritzsystems, bei der überschüssiger Kraftstoff über eine Bypassleitung in die Kraftstoffleitung zurückgeführt wird, und zwar über einen Kraftstofffilter und einen Wärmetauscher.

Ferner ist aus der DE 200 15 011 U1 eine Vorrichtung zum rücklauffreien Betreiben von Dieselmotoren mit Pflanzenöl bekannt, bei der als wählbare Option der Rücklauf mit dem Saugbereich der Kraftstoffförderpumpe zwischen Pumpe und Kraftstofffilter verbindbar ist. Über eine Rücklaufleitung wird der überschüssige Kraftstoff von der Verteilereinspritzpumpe bzw. dem Einspritzsystem rückgeführt, und zwar über einen reduzierten Querschnitt und ein in der Saugleitung vorgesehenes T-Stück.

Aufgabe der Erfindung ist es, eine Wärmetauschmodul für den Einsatz in einer ein Einspritzsystem aufweisenden Brennkraftmaschine anzugeben, das den Kraftstoff im Einspritzsystem auf eine für die Einspritzung optimale Temperatur erwärmt und auf diesem Temperaturniveau hält.

Diese Aufgabe wird ausgehend von einem Wärmetauschmodul gemäß dem Oberbegriff des Patentanspruches 1 durch dessen kennzeichnende Merkmale gelöst.

Der wesentliche Aspekt des erfindungsgemäßen Wärmetauschmodul besteht darin, dass der Verteilerblock ein mit der zweiten Kraftstoff leitung verbundenes Bypassventil aufweist, über welches der vom Einspritzsystem rückgeführte Kraftstoff dem Verteilerblock erneut zugeführt wird. Abhängig von der Schaltstellung des Bypassventils wird der erneut zugeführte Kraftstoff über einen ersten Leitungspfad oder einen zweiten Leitungspfad an die erste Kraftstoffleitung rückgeführt, wobei der erste und zweite Leitungspfad durch innerhalb des Verteilerblocks verlaufende Bohrungen und Fräsungen gebildet sind und über den ersten Leitungspfad ein Wärmeaustausch zwischen dem Verteilerblock und dem rückgeführten Kraftstoff erfolgt, wodurch ein über das Bypassventil gesteuerter thermischer Ausgleich zwischen dem aus dem Einspritzsystem rückgeführten zumindest einen Kraftstoff und dem Verteilerblock erfolgt, indem der Verteilerblock dem umlaufenden Kraftstoff thermische Energie entnimmt, speichert und/oder diese dem Kraftstoff wieder zuführt. Der das Einspritzsystem verlassende Kraftstoff wird der Kraftstoffzuführung des Einspritzsystems über den Verteilerblock wieder zugeschnitten (kurzgeschlossener Rücklauf). Der vom Kraftstoff durchströmte Verteilerblock ist in der Lage die Temperatur des dem Einspritzsystem zugeführten Kraftstoffes in engen Grenzen konstant zu halten, ohne dass ein Rücklauf von bereits erwärmtem Pflanzenöl zum Tank erforderlich wird. Der Kraftstoff erwärmt sich hierbei beim Durchfluss durch das Einspritzsystem vor allem durch die mechanische Arbeit bei der Erzeugung hoher Drücke und die abgegebene Abwärme der Verbrennung. Der Verteilerblock entnimmt dem umlaufenden Kraftstoff bei Bedarf thermische Energie, speichert diese und / oder führt dem Kraftstoff diese wieder zu.

Vorteilhafte Weiterbildungen der Erfindung sind den weiteren Unteransprüchen zu entnehmen.

Ein Ausführungsbeispiel der Erfindung wird im Folgenden anhand eines schematischen Blockschaltbildes näher erläutert.

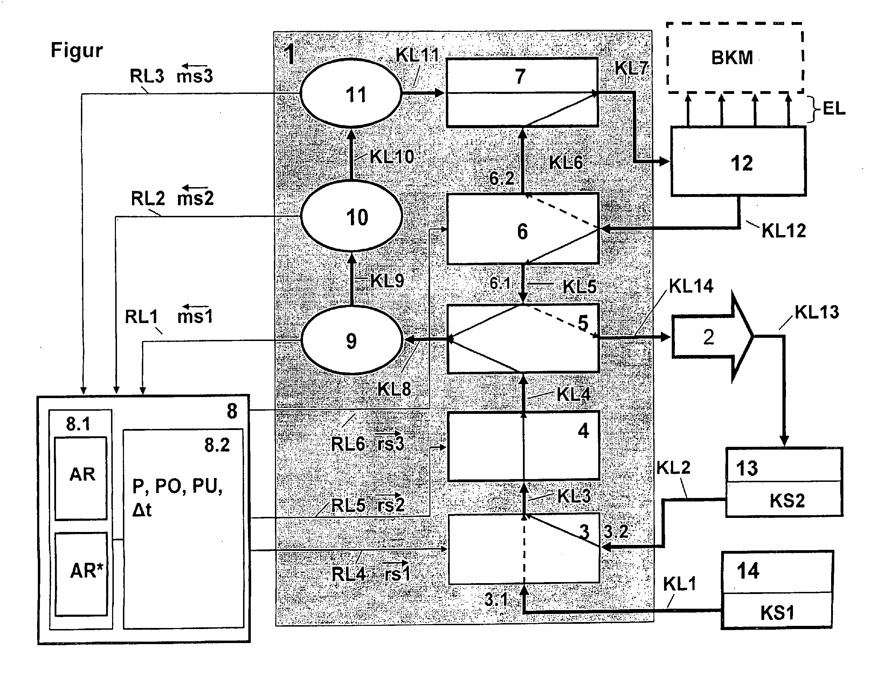

Die Figur zeigt beispielhaft in einem schematischen Blockschaltbild eine Ausführungsform des erfindungsgemäßen Verteilerblocks 1 , der mit einem Einspritzsystem 12, das über mehrere Einspritzleitungen EL beispielhaft an eine Brennkraftmaschine BKM angeschlossen, in die zumindest eine Kraftstoffsorte KS1, KS2 bzw. ein Kraftstoffgemisch eingespritzt wird, verbunden ist. Darüber hinaus sind ein erster Kraftstofftank 14 und ein zweiter Kraftstofftank 13 über eine erste und zweite Kraftstoffleitung KL1, KL2 an den Verteilerblock 1 angeschlossen. Hierbei weist der erste Kraftstofftank 12 eine erste Kraftstoffsorte KS1, im vorliegenden Ausführungsbeispiel mit Dieselkraftstoff, und der zweite Kraftstofftank 14 eine zweite Kraftstoffsorte KS2, beispielsweise Pflanzenöl auf. Ferner ist der Verteilerblocks 1 über ein Überdruckventil 2 mit dem zweiten Kraftstofftank 13 verbunden und über erste bis sechste Regelleitungen RL1 bis RL6 an eine Regeleinheit 8 angeschlossen.

Der Verteilerblock 1 weist beispielhaft ein Vorlaufventils 3, einer Vorförderpumpe 4, einen Kraftstofffilter 5, ein Bypassventil 6, eine T-Verschneidungseinheit 7 sowie eine Druckmesszelleneinheit 9, eine Volumenstrommesseinrichtung 10 und eine Temperatursensoreinheit 11 auf.

Der erste Kraftstofftank 14 ist über die erste Kraftstoffleitung KL1 an einen ersten Eingang 3.1 des Vorlaufventils 3 und der zweite Kraftstofftank 13 ist über die zweite Kraftstoffleitung KL2 an einen zweiten Eingang 3.2 des Vorlaufventils 3 angeschlossen. Darüber hinaus ist das Vorlaufventil 3 über eine dritte Kraftstoffleitung KL3 an die Vorförderpumpe 4 geführt, die über eine vierte Kraftstoffleitung KL4 an einen Kraftstofffilter 5 angeschlossen ist. Diese kann beispielsweise als eine an einem Filterflansch, der Bestandteil des Verteilerblockes 1 ist, verschraubte Kraftstofffilterpatrone ausgestaltet sein.

Das Kraftstofffilter 5 ist über eine achte Kraftstoffleitung KL8 mit einer Druckmesszelleneinheit 9 verbunden, die im betrachteten Ausführungsbeispiel als ein piezoresistiver Halbleitersensor mit Absolutdruckmessung durch Referenzvakuum realisiert ist. Die Druckmesszelleneinheit 9 ist Ihrerseits über eine neunte Kraftstoffleitung KL9 mit der Volumenstrommesseinrichtung 10 verbunden, die über eine zehnte Kraftstoffleitung KL10 an die Temperatursensoreinheit 11 geführt ist. Die Temperatursensoreinheit 11 kann in einer bevorzugten Ausführungsform beispielsweise als NTC-Halbleiter realisiert sein.

Ferner ist die Temperatursensoreinheit 11 über eine elfte Kraftstoffleitung KL11 mit der T-Verschneidungseinheit 7 verbunden, die über eine siebte Kraftstoffleitung KL7 an das Einspritzsystem 12 geführt ist. Zur Rückführung des Kraftstoffgemisches aus dem Einspritzsystem 12 in den Verteilerblock 1 ist dieser bzw. das im Verteilerblock 1 angeordnete über Bypassventil 6 über eine zwölfte Kraftstoffleitung KL12 mit dem Einspritzsystem 12 verbunden.

Im dargestellten Ausführungsbeispiel sind das Vorlauf- und auch das Bypassventil 3,6 als 3/2-Wege-Ventile ausgestaltet, welche vorzugsweise als elektrisch betätigbare Magnetventile realisiert sein können. Ferner weist das Bypassventil 6 eine erste und zweite Schaltstellung 6.1, 6.2 auf, die in der Figur anhand von einer durchgezogenen bzw. strichlierten Linie angedeutet sind. In der ersten Schaltstellung 6.1 wird das Einspritzsystem 12 über die zwölfte Kraftstoffleitung KL12 mit dem Bypassventil 6 und dieses über die fünfte Kraftstoffleitung KL5 mit einem Eingang des Kraftstofffilters 5 verbunden. In der zweiten Schaltstellung 6.2 wird das Einspritzsystem 12 über die zwölfte Kraftstoffleitung KL12 mit dem Bypassventil 6 und dieses über die sechste Kraftstoffleitung KL6 mit der T-Verschneidungseinheit 7 verbunden, welche wiederum über die siebte Kraftstoffleitung KL7 zum Einspritzsystem 12 zurückführt und somit einen Kreislauf schließt.

Der Kraftstofffilter 5 ist über die vierzehnte Kraftstoffleitung KL14 mit dem Überdruckventil 2 verbunden, wobei das Überdruckventil 2 beispielsweise als federbelastetes Tellerventil ausgestaltet sein kann. Das Überdruckventil 2 ist schließlich über eine dreizehnte Kraftstoffleitung KL13 mit dem zweiten Kraftstofftank 13 verbunden.

Die im folgenden Ausführungsbeispiel im Verteilerblock enthaltenen Einheiten und Kraftstoffleitungen sind beispielhaft gewählte und können von Anwendungsfall zu Anwendungsfall variieren.

Ein derartiger Verteilerblock 1 ist in einer besonders bevorzugt Ausgestaltung der Erfindung aus Aluminium gefertigt, wobei die Bohrungen und Fräsungen innerhalb des Verteilerblock 1 die Leitungspfade definieren und zur Montage von Aktoren und Sensoren dienen. Der Verteilerblock 1 kann beispielsweise durch entsprechend vorgesehene Kanäle - in der Figur nicht dargestellt - zusätzlich mit Wasser durchströmt werden. Hierzu kann vorzugsweise das Kühlwasser der Brennkraftmaschine BKM verwendet werden, das hierdurch auf konstanter Temperatur gehalten werden kann.

Die Regeleinheit 8 ist über eine erste Regelleitung RL1 mit der Druckmesszelleneinheit 9, über eine zweite Regelleitung RL2 mit der Volumenmesseinrichtung 10 und über eine dritte Regelleitung RL3 mit der Temperatursensoreinheit 11 verbunden. An die Regeleinheit 8 sind außerdem über eine vierte Regelleitung RL4 das Vorlaufventil 3, über eine fünfte Regelleitung RL5 die Vorförderpumpe 4 und über eine sechste Regelleitung RL6 das Bypassventil 6 angeschlossen.

Die Regeleinheit 8 weist eine Mikroprozessoreinheit 8.1 und eine Speichereinheit 8.2 auf, wobei in der Mikroprozessoreinheit 8.1 eine Auswerteroutine AR vorgesehen ist, über die die beispielhaft als elektronische Magnetventile realisierten Vor- und Rücklaufventile 3, 6 und die Vorförderpumpe 4 anhand von ersten bis dritten Regelsignalen rs1 bis rs3 geschaltet werden bzw. Betriebsparameter mit Hilfe der Druckmesszelleneinheit 9, der Volumenstrommesseinrichtung 10 und des Temperatursensoreinheit 11 gemessen, über eine erste bis dritte Messsignale ms1 bis ms3 an die Regeleinheit 8 übertragen und in der Speichereinheit 8.2 abgespeichert werden können.

Im Folgenden werden anhand des in der Figur dargestellten schematischen Blockschaltbildes die unterschiedlichen Betriebsarten der Brennkraftmaschine BKM mit Dieselkraftstoff als erste Kraftstoffsorte KS1 und Pflanzenöl als zweite Kraftstoffsorte KS2 näher erläutert.

Die Funktion des Bypassventil 6 kann hierbei einer separaten Betrachtung unterzogen werden, da das Bypassventil 6 abhängig von den in der Druckmesszelleneinheit 9, der Volumenmesseinrichtung 10 und der Temperatursensoreinheit 11 gemessenen ersten bis dritten Messsignale ms1 bis ms3 entweder in die erste oder zweite Schaltstellung 6.1, 6.2 geschaltet wird. Zum Abkühlen des über die zwölfte Kraftstoffleitung KL12 vom Einspritzsystem 12 rücklaufenden Kraftstoffes wird dieser durch das Schalten des Bypassventils 6 in die erste Schaltstellung 6.1 über den Kraftstofffilter 5 geführt und kühlt dabei selbst ab und erwärmt hierdurch zugleich den Kraftstofffilter 5 selbst, wobei eine Vermischung mit dessen Inhalt hierbei erfolgt.

In der zweiten Schaltstellung 6.2 wird der über die zwölfte Kraftstoffleitung KL12 rücklaufende Kraftstoff unter Umgehung des Kraftstofffilters 5 über die T-Verschneidungseinheit 7 wieder der Vorlaufleitung bzw. der siebten Kraftstoffleitung KL7 zugeführt. Dadurch sind Kraftstofftemperaturen im Einspritzsystem 12 erreichbar, die höher sind als die momentane Temperatur des Verteilerblockes 1. Davon kann insbesondere vorteilhaft Gebrauch gemacht werden, wenn eine schnelle Erwärmung des Einspritzsystems 12 auf Betriebstemperatur erforderlich ist.

Beim Pflanzenöl- bzw. Dieselbetrieb ohne Rücklauf wird der Brennkraftmaschine BKM über das Vorlaufventil 3 wahlweise in einer ersten Schaltstellung 3.1 Dieselkraftstoff KS2 oder in einer zweiten Schaltstellung 3.2 Pflanzenöl KS2 zugeführt. Die Vorförderpumpe 4 ist über das Vorlaufventil 3 - je nach geschalteter Schaltstellung - mit dem Dieseltank 14 oder den Pflanzenöltank 13 verbunden.

Im Folgenden wird die Funktionsweise beispielhaft für Pflanzenölbetrieb beschrieben. Die Vorförderpumpe 4 pumpt Pflanzenöl KS1 aus dem Pflanzenöltank 13 über die zweite Kraftstoffleitung KL2, das die zweite Schaltstellung 3.2 aufweisende Vorlaufventil 3, die dritte und vierte Kraftstoffleitung KL3, KL4 in den Kraftstofffilter 5.

Solange der mit der Druckmesszelleneinheit 9 gemessene und über die Auswertroutine AR ausgewertete Druck P kleiner als der Öffnungsdruck bzw. des oberen Referenzdruckes PO des Überdruckventils 2 ist, erhöht sich der Druck P im Leitungssystem aus der vierten und vierzehnten Kraftstoffleitung KL4, KL14 und dem Einspritzsystem 12. Ist der über die Auswerteroutine AR ermittelte Druck P gleich oder größer als der Öffnungsdruck PO des Überdruckventils 2, so wird über ein in der Regeleinheit 8 erzeugtes zweites Regelsignal rs2, das über die fünfte Regelleitung RL5 an die Vorförderpumpe 4 übertragen wird, die Vorförderpumpe 4 ausgeschaltet.

Nach Abschalten der Vorförderpumpe 4 fällt der Druck P aufgrund des über die Einspritzleitungen EL das Einspritzsystem 12 verlassenden Kraftstoff ab. Nimmt der mittels der Druckmesszelleneinheit 9 über die erste Regelleitung RL1 gemessene Druck P ab und weist einen Wert kleiner oder gleich einem unteren Referenzdruckes PU auf, so wird die Vorförderpumpe 4 mittels des über die fünfte Regelleitung RL5 übertragenen zweiten Regelsignals rs2 wieder eingeschaltet. Hier sind sowohl die obere als auch der untere Referenzdruck PO, PU in der Speichereinheit 8.2 gespeichert, die abhängig von den vorliegenden Systemparametern festgelegt werden. Der beschriebene Betriebmodus wird nun zyklisch fortgesetzt. Hierbei kann beispielsweise über zyklisches Umschalten des Vorlaufventils 3 von der ersten in die zweite Schaltstellung 3.1, 3.2 und vice versa entsprechend dem Schaltverhältnis ein vorgegebenes Kraftstoffmischungsverhältnis eingestellt werden.

In einer bevorzugten Betriebsweise kann eine Luft- bzw. Dampfabscheidung der betrachteten Vorrichtung durchgeführt werden. Hierzu wird nach dem Abschluss eines zuvor beschriebenen Zyklus und somit vor dem Abschalten der Vorförderpumpe 4 der Druck P beispielsweise einmalig über den oberen Referenzdruck PO angehoben, was ein Öffnen des Überdruckventils 2 nach sich zieht. Bauart bedingt wird die nach dem Überdruckventils 2 angesammelte Luft (sofern vorhanden) in die Rücklaufleitung bzw. dreizehnte Kraftstoffleitung KL13 in Pflanzenöltank 13 rückgeführt. Nach einer vorgegebenen kurzen Zeitspanne Δt wird die Vorförderpumpe 4 wieder ausgeschaltet und ein neuer Zyklus des Pflanzenölbetriebs gestartet.

Darüber hinaus ermöglicht die Auswertung des in der Druckmesszelleneinheit 9 gemessenen ersten Messsignals ms1 und des in der Volumenstrommesseinrichtung 10 gemessenen zweiten Messsignals ms2 unter Berücksichtigung der über die Temperatursensoreinheit 11 ermittelten Temperatur 11 ("drittes Messsignal ms3") anhand einer weiteren Auswerteinheit AR* die Ermittlung der Viskosität des Kraftstoffes und/oder des Filterzustands. Hierzu werden die ermittelten ersten bis dritten Messsignale ms1 bis ms3 mit in der Speichereinheit 8.2 hinterlegten Referenzwerten verglichen und abhängig von dem Vergleichsergebnis die Viskosität des Kraftstoffes und/oder des Filterzustands durch Schätzung ermittelt. Bei einem bekannten Kraftstoffmischungsverhältnis beispielsweise 100% Dieselkraftstoff kann eine Aussage über den Filterzustand getroffen werden. Ferner kann über einen bekanntem Filterzustand, dessen Wert beispielsweise zu einem Zeitpunkt eines bekannten Kraftstoffmischungsverhältnisses in der Speichereinheit 8.2 gespeichert wurde die Viskosität des Kraftstoffes bzw. Kraftstoffgemisches ermittelt werden. Bei bekannter Temperatur ist diese ihrerseits eine Funktion des Kraftstoffmischungsverhältnisses.

Vorteilhaft weist der vorzugsweise als Aluminiumblock ausgestaltete Verteilerblock 1 in sämtlichen beschriebenen Betriebszuständen, bei denen das Bypassventil 6 die erste Schaltstellung 6.1 aufweist und der Kraftstoff über das Kraftstofffilter 5 geführt wird, der den Verteilerblock 1 verlassende Kraftstoff die Temperatur des Verteilerblockes 1 auf. Hierbei erfolgt ein Wärmeaustausch zwischen Verteilerblock 1 und Kraftstoff und vice versa.

Im vorliegenden Ausführungsbeispiel wird die Erfindung anhand eines ersten und zweiten Kraftstofftanks 13, 14 und eines zu Umschaltzwecken vorgesehen Vorlaufventils 3 beschrieben. Ein Fachmann erkennt jedoch sofort, dass dies nicht zwingend erforderlich ist und ein Tank zur Realisierung der Erfindung vollkommen ausreichend ist. Ebenso erkennt ein Fachmann, dass auf die Durchflussmesseinrichtung 10 verzichtet werden kann, ohne das die prinzipielle Funktionsweise der Erfindung beeinträchtigt wird.

Auch das Bypassventil 6 kann optional zur Temperaturregelung vorgesehen werden, wobei auch Ausgestaltungen denkbar sind, bei denen auf die Regeleinheit dadurch verzichtet werden kann, dass anstatt dem Überdruckventils eine Überströmdrossel vorgesehen wird.

Die Erfindung wurde voranstehend anhand eines Ausführungsbeispiels beschrieben. Es versteht sich, daß zahlreiche Änderungen möglich sind, ohne daß dadurch die Erfindung, wie sie in den Ansprüchen definiert ist, verlassen wird.

## Patentansprüche

1. Wärmetauschmodul in Verbindung mit einem Einspritzsystem (12) einer Brennkraftmaschine (BKM),
1.1 mit einem aus einem wärmeleitfähigen Material hergestellten Verteilerblock (1),
1.2 welcher über zumindest eine Kraftstoffleitung (KL7) mit dem Eingang des Einspritzsystems (12) und über zumindest eine zweite Kraftstoffleitung (KL12) mit dem Ausgang des Einspritzsystems (12) verbunden ist,
1.3 wobei zum Betrieb der Brennkraftmaschine (BKM) dem Einspritzsystem (12) über den Verteilerblock (1) und die erste Kraftstoffleitung (KL7) zumindest eine erste Kraftstoffsorte (KS1) zugeführt wird,
**dadurch gekennzeichnet,**
1.4 dass der Verteilerblock (1) ein mit der zweiten Kraftstoffleitung (KL12) verbundenes Bypassventil (6) aufweist,
1.5 über welches der vom Einspritzsystem (12) rückgeführte Kraftstoff (KS1) dem Verteilerblock (1) erneut zugeführt wird,
1.6 dass abhängig von der Schaltstellung des Bypassventils (6) der erneut zugeführte Kraftstoff (KS1) über einen ersten Leitungspfad (KL5, KL8, KL9, KL10, KL11) Oder einen zweiten Leitungspfad (KL6) an die erste Kraftstoffleitung (KL7) rückgeführt wird, wobei der erste und zweite Leitungspfad (KL5, KL6, KL8, KL9, KL10, KL11) durch innerhalb des Verteilerblocks (1) verlaufende Bohrungen und Fräsungen gebildet sind und
1.7 über den ersten Leitungspfad (KL5, KL8, KL9, KL10, KL11) ein Wärmeaustausch zwischen dem Verteilerblock (1) und dem rückgeführten Kraftstoff (KS1) erfolgt,
1.8 wodurch ein über das Bypassventil (6) gesteuerter thermischer Ausgleich zwischen dem aus dem Einspritzsystem (12) rückgeführten zumindest einen Kraftstoff (KS1) und dem Verteilerblock (1) erfolgt, indem der Verteilerblock (1) dem umlaufenden Kraftstoff (KS1) thermische Energie entnimmt, speichert und/oder diese dem Kraftstoff (KS1) wieder zuführt.

2. Wärmetauschmodul nach Anspruch 1,
**dadurch gekennzeichnet,**
**dass** zur Erwärmung des Verteilerblockes (1) dieser zusätzlich an den Kühlwasserkreislauf der Brennkraftmaschine (BKM) angeschlossen ist.

3. Wärmetauschmodul nach Anspruch 1 oder 2,
**dadurch gekennzeichnet,**
**dass** der Verteilerblock (1) eine Vorförderpumpe (4) aufweist.

4. Wärmetauschmodul nach einem der Ansprüche 1 bis 3,
**dadurch gekennzeichnet,**
**dass** der Verteilerblock (1) eine Kraftstofffilter (5) aufweist, wobei über den Kraftstofffilter (5) zumindest teilweise ein thermischer Ausgleich zwischen dem aus dem Einspritzsystem (12) geförderten zumindest einen Kraftstoff (KS1) und dem Verteilerblock (1) erfolgt.

5. Wärmetauschmodul nach einem der Ansprüche 1 bis 4,
**dadurch gekennzeichnet,**
**dass** der Verteilerblock (1) ein zur Luftabscheidung vorgesehenes Überdruckventil (2) aufweist.

6. Wärmetauschmodul nach einem der Ansprüche 1 bis 5,
**dadurch gekennzeichnet,**
**dass** der Verteilerblock (1) ein Vorlaufventil (3) zur wahlweisen Zuführung eines ersten oder zweiten Kraftstoffes (KS1, KS2) aufweist.

7. Wärmetauschmodul nach einem der Ansprüche 1 bis 6,
**dadurch gekennzeichnet,**
**dass** der Verteilerblock (1) eine Druckmesszelleneinheit (9), eine Volumenmesseinrichtung (10) und/oder Temperatursensoreinheit (11) aufweist, die jeweils über Regelleitungen (RL1 bis RL3) mit einer Regeleinheit (8) verbunden sind.

8. Wärmetauschmodul nach einem der Ansprüche 1 bis 7,
**dadurch gekennzeichnet,**
**dass** der Verteilerblock (1) eine elektrische Zusatzheizung zur dessen Erwärmung aufweist.

9. Wärmetauschmodul nach einem der Ansprüche 1 bis 8,
**dadurch gekennzeichnet,**
**dass** bei der Zuführung von ersten und zweiten, unterschiedliche Temperaturen aufweisenden Kraftstoffstoffen (KS1, KS2) in den Verteilerblock (1) deren Temperaturunterschied ausgeglichen wird.

## Claims

1. Heat exchange module in conjunction with an injection system (12) of an internal-combustion engine (BKM),
1.1 comprising a distributor block (1) manufactured from a heat conductive material,
1.2 which is connected via at least one fuel line (KL7) with the intake of the injection system (12) and via at least one second fuel line (KL12) with the output of the injection system (12),
1.3 wherein for operating the internal-combustion engine (BKM) at least one first fuel type (KS1) is supplied to the injection system (12), via the distributor block (1) and the first fuel pipe (KL7),
**characterised in**
1.4 that the distributor block (1) comprises a bypass valve (6), connected with the second fuel pipe (KL12)
1.5 via which the fuel (KS1) returned from the injection system (12) is again supplied to the distributor block (1),
1.6 **in that** depending on the flow position of the bypass valve (6) the re-supplied fuel (KS1) is returned via a first pipe path (KL5, KL8, KL9, KL10, KL11) or a second fuel pipe (KL6) to the first fuel pipe (KL7), the first and the second line path (KL5, KL6, KL8, KL9, KL10, KL11) being formed by bores and ducts running inside the distributor block (1) and,
1.7 via the first line path (KL5, KL8, KL9, KL10, KL11), heat exchange takes place between the distributor block (1) and the returned fuel (KS1)
1.8 as a result of which thermal compensation, controlled by the bypass valve (6), takes place between the at least one fuel (KS1) returned to the injection system (12) and the distributor block (1), by the distributor block (1) drawing and storing thermal energy from the circulating fuel (KS1) and/or again supplying this to the fuel (KS1).

2. Heat exchange module according to claim 1, **characterised in that** for heating of the distributor block (1) said block is additional connected to the cooling water cycle of the internal-combustion engine (BKM).

3. Heat exchange module according to claim 1 or 2, **characterised in that** the distributor block (1) comprises a pre-supply pump (4).

4. Heat exchange module according to anyone of claims 1 to 3, **characterised in that** the distributor block (1) comprises a fuel filter (5), wherein via said fuel filter (5) at least a partial thermal compensation takes place between the at least one fuel (KS1) conveyed out of the injection system (12) and the distributor block (1).

5. Heat exchange module according to anyone of claims 1 to 4, **characterised in that** the distributor block (1) comprises a mechanism for the separation of air, the mechanism being an excess pressure valve (2).

6. Heat exchange module according to anyone of claims 1 to 5, **characterised in that** the distributor block (1) comprises a forward flow valve (3) for the selectable supply of a first or second fuel (KS1, KS2).

7. Heat exchange module according to anyone of claims 1 to 6, **characterised in that** the distributor block (1) features a pressure sensor 9, volume meter device 10 and/or temperature sensor 11, which are connected respectively via regulating lines (RL1 to RL3) with a regulating unit (8).

8. Method according to anyone of claims 1 to 7, **characterised in that** the distributor block (1) comprises a supplementary electric heater for heating the distributor block.

9. Method according to anyone of claims 1 to 8, **characterised in that** when supplying first and second fuels of differing temperatures (KS1, KS2) to the distributor block (1), t compliant with its obligations he difference in their temperatures is equalised.

## Revendications

1. Module d'échange thermique raccordé au système d'injection (12) d'un moteur à combustion interne (BKM=*BrennKraftMaschine*),
1.1 avec un bloc répartiteur (1) fabriqué dans un matériau conducteur de la chaleur,
1.2 raccordé par au moins une conduite de carburant (KL7) avec l'entrée du système d'injection (12) et par au moins une deuxième conduite de carburant (KL12) avec la sortie du système d'injection (12),
1.3 pour le fonctionnement du moteur à combustion interne (BKM) au moins un premier type de carburant (KS1) étant amené au système d'injection (12) par le bloc répartiteur (1) et la première conduite de carburant (KL7),
**caractérisé en ce que**
1.4 le bloc répartiteur (1) présente une soupape de dérivation (6) raccordant la deuxième conduite de carburant (KL12),
1.5 par laquelle le carburant (KS1) refoulé du système d'injection (12) est de nouveau amené au bloc répartiteur (1),
1.6 **en ce que** en fonction de la position de marche de la soupape de dérivation (6), le carburant à nouveau amené (KS1) est refoulé par un premier trajet de conduite (KL5, KL8, KL9, KL10, KL11) ou par un deuxième trajet de conduite (KL6) à la première conduite de carburant (KL7), le premier et le deuxième trajet de conduite (KL5, KL6, KL8, KL9, KL10, KL11) sont formés par des forures et des fraisures à l'intérieur du bloc répartiteur (1), et
1.7 par le premier trajet de conduite (KL5, KL8, KL9, KL10, KL11), se produit un échange thermique entre le bloc répartiteur (1) et le carburant refoulé (KS1),
1.8 ce qui produit un équilibre thermique commandé par la soupape de dérivation (6) entre le au moins un carburant (KS1) refoulé hors du système d'injection (12) et le bloc répartiteur (1), **en ce que** le bloc répartiteur (1) prélève au carburant en circulation (KS1) de l'énergie thermique, la stocke et/ou la reconduit au carburant (KS1).

2. Module d'échange thermique selon la revendication 1,
**caractérisé en ce que**
pour le chauffage du bloc répartiteur (1) celui-ci est raccordé en plus à la circulation du liquide de refroidissement du moteur à combustion interne (BKM).

3. Module d'échange thermique selon la revendication 1 ou 2,
**caractérisé en ce que**
le bloc répartiteur (1) présente une pompe de préalimentation (4).

4. Module d'échange thermique selon l'une des revendications 1 à 3,
**caractérisé en ce que**
le bloc répartiteur (1) présente un filtre à carburant (5), dans lequel il se produit par le filtre à carburant (5) au moins partiellement un équilibre thermique entre le au moins un carburant (KS1) amené du système d'injection (12) et le bloc répartiteur (1).

5. Module d'échange thermique selon l'une des revendications 1 à 4,
**caractérisé en ce que**
le bloc répartiteur (1) présente une soupape de surpression (2) prévue pour un dégagement d'air.

6. Module d'échange thermique selon l'une des revendications 1 à 5,
**caractérisé en ce que**
le bloc répartiteur (1) présente un clapet-pilote (3) pour l'amenée facultative d'un premier ou d'un deuxième carburant (KS1, KS2).

7. Module d'échange thermique selon l'une des revendications 1 à 6,
**caractérisé en ce que**
le bloc répartiteur (1) présente une unité de cellule de mesure de la pression (9), un dispositif de mesure du volume (10) et/ou une unité de capteur de température (1) qui sont raccordés chacun par des conduites de régulation (RL1 à RL3) avec une unité de régulation (8).

8. Module d'échange thermique selon l'une des revendications 1 à 7,
**caractérisé en ce que**
le bloc répartiteur (1) présente un chauffage électrique supplémentaire pour le chauffage de celui-ci.

9. Module d'échange thermique selon l'une des revendications 1 à 8,
**caractérisé en ce que**
lors de l'amenée des premier et deuxième carburants (KS1, KS2) présentant des températures différentes, dans le bloc répartiteur (1) la différence de température qui y règne est équilibrée.
